# DEMANDE DE BREVET EUROPEEN

(11) **EP 2 774 809 A1**
(43) Date de publication de la demande: **10.09.2014**
(21) Numéro de dépôt: 14305334.6
(22) Date de dépôt: 07.03.2014
(51) Int. Cl.: B60P 1/14

(54) **Dispositif de manoeuvre en inclinaison du plateau d'une remorque**

(30) Priorité: 08.03.2013 FR 1352082
(71) Demandeur: SAS Jacques Reynier, 87110 Bosmie-L'Aiguille (FR)
(72) Inventeur: Reynier, Jacques Max, 87110 BOSMIE-L'AIGUILLE (FR); Lefebvre, Pierre-Henri, 87410 LE PALAIS SUR VIENNE (FR); Merle, Jean-Noël, 87620 SEREILHAC (FR); Wijnbelt, Bert, 87110 SOLIGNAC (FR)
(74) Mandataire: Fantin, Laurent

(57) **Abrégé**

L'objet de l'invention est un dispositif de manoeuvre en inclinaison du plateau (18) d'une remorque bagagère comprenant un châssis (10), un axe XX' de pivotement dudit plateau (18) par rapport à ce châssis (10), caractérisé en ce qu'il comprend un mât (28) fixe, perpendiculaire par rapport au châssis, se prolongeant vers le haut, muni d'un treuil (32), d'un câble (36) et d'une poulie (30) de renvoi dudit câble ainsi que d'un bras de force, solidaire du plateau (18), recevant le câble (36).

## Description

La présente invention concerne un dispositif de manoeuvre en inclinaison du plateau d'une remorque, du type bagagère.

On entend pour la suite de la description comme remorque bagagère, une remorque de petite capacité, utilisée généralement par des particuliers ou de petites entreprises pour transporter tous types de produits en vrac comme du sable, du gravier, de la terre ou des déchets verts pour ne citer que ceux-là. Pour donner un ordre d'idées, la charge utile reste inférieure à 600Kg.

Ces remorques comprennent un châssis sur lequel est monté un plateau, l'avant du châssis constituant le timon, l'extrémité dudit timon portant une tête d'attelage destinée à venir coopérer avec un attelage d'un véhicule tracteur. On entend par plateau une surface plane dont les côtés peuvent être équipés de ridelles, fixes ou amovibles, pour former un réceptacle des charges en vrac.

De même il est parfaitement connu de prévoir une ridelle arrière qui s'ouvre de façon basculante ou qui est intégralement amovible, de même pour un des côtés latéraux.

Ces ridelles peuvent aussi comporter des rehausses mais ceci n'est pas l'objet de la présente invention, ces agencements étant considérés comme des accessoires.

La présente invention vise une remorque qui comporte un plateau monté pivotant autour soit d'un axe XX' transversal à l'arrière, défini par rapport au sens d'avancement, soit d'un axe YY' longitudinal, latéral, au droit d'un côté latéral et qui comporte des moyens de manoeuvre du dudit plateau autour de l'axe retenu, transversal ou longitudinal.

Cet objectif est connu car il permet à l'utilisateur de ne pas avoir à vider le plateau manuellement, surtout pour les chargements de matériaux en vrac mais il autorise au contraire un déchargement par déversement.

Par contre il faut manoeuvrer ledit plateau et même si la charge est limitée, le poids du plateau reste très supérieur au potentiel de puissance d'un utilisateur, sans moyens complémentaires.

Il faut donc recourir à des moyens mécaniques de manoeuvre.

Le but est aussi d'atteindre un degré d'inclinaison proche de 90° afin d'être certain de vider parfaitement le contenu du plateau et d'éviter un étalement au sol de la charge ainsi déchargée.

On connaît différents dispositifs de manoeuvre de l'art antérieur qui permettent d'atteindre une partie du résultat recherché mais comme on peut le constater ils sont compliqués et restent d'un coût significatif en regard du coût d'une remorque bagagère dans son ensemble.

Ainsi, il existe des moyens de manoeuvre qui comprennent une pompe hydraulique à actionnement manuel ou électrique et un vérin, au moins, alimenté par ladite pompe et qui soulève le plateau par rapport au châssis assurant ainsi son basculement.

Tout d'abord, il est rappelé que la charge étant limitée, le recours à l'hydraulique paraît démesuré car les moyens hydrauliques sont généralement réservés à des dispositifs nécessitant des gammes élevées de puissance. De tels moyens représentent une masse significative qui doit venir en déduction de la charge utile de la remorque, ce qui n'est pas adapté pour ce type de remorque. De plus, le surcoût d'un tel équipement est sans rapport avec le prix de la remorque elle-même.

On connaît le modèle d'utilité allemand DE 93 03 905 qui propose une remorque avec un plateau qui est monté pivotant par rapport à un axe transversal arrière disposé au droit de la ridelle arrière et des moyens mécaniques de levage à actionnement manuel.

Cet agencement propose un mât articulé en pied pour pivoter vers l'arrière et au moins un galet de guidage solidaire du plateau et coulissant sur ledit mât. Un treuil manuel à câble, muni d'un tambour et d'une manivelle d'entraînement, actionnable par l'utilisateur, permet les mouvements du câble. Le câble issu du tambour situé en partie basse du mât passe par la tête du mât dans une poulie de renvoi et l'extrémité libre du câble est reliée à l'avant de la remorque à proximité immédiate du galet de guidage.

Ce dispositif est économe mais il ne permet pas d'atteindre des angles élevés d'inclinaison du plateau car l'avant du plateau coopère avec ledit mât dont la hauteur est nécessairement limitée.

La demande de brevet GB 821 167 décrit un agencement destiné à une remorque prévue pour être utilisée avec un engin agricole du type tracteur agricole car il faut pouvoir disposer d'un attelage trois points et d'une très forte puissance en l'occurrence la puissance hydraulique associée à l'attelage trois points car il n'y a aucun effet de démultiplication comme peut procurer un moufle.

En effet, l'agencement comprend un bras fixe, solidaire du plateau et perpendiculaire à sa surface. Une des extrémités de ce câble est solidarisée à l'extrémité de ce bras fixe tandis que l'autre extrémité passe à travers des poulies pour être directement solidarisée à l'extrémité de l'attelage trois points.

Lors de la manoeuvre de l'attelage trois points vers le haut, le câble tracté tire sur le bras fixe qui fait basculer le plateau de la remorque.

En dehors du fait qu'il faut nécessairement de la puissance délivrée par l'engin tracteur, l'angle d'inclinaison reste nécessairement limité du fait que la poulie de renvoi assurant la direction de traction du câble est solidaire du châssis et quasiment dans son plan.

La présente invention est maintenant décrite en détail suivant un mode de réalisation particulier non limitatif, en regard d'un mode de réalisation représenté sur les dessins annexés, dessins sur lesquels les figures représentent respectivement :
- Figure 1A : une vue en élévation latérale, du dispositif selon la présente invention, en position neutre chargée,
- Figure 1B : une vue de la figure 1A, avec le plateau en position de début de basculement,
- Figure 1C : une vue de la figure 1B, avec le plateau en position de perte du second point d'appui,
- Figure 1D : une vue de la figure 1C en position totalement basculée, sensiblement à 90°.
- Figure 2 : une vue d'un dispositif de sécurité de retour,
- Figure 3 : une vue d'une variante d'un dispositif à plateau à basculement latéral,
- Figure 4 : une vue d'une variante avec bras de traction escamotable,
- Figure 5A : une vue d'une variante avec un bras de force sous forme d'un compas, en position d'ouverture,
- Figure 5B : une vue d'une variante avec un bras de force sous forme d'un compas, en position ouverte, avec plateau en position totalement basculée,
- Figure 6 : une vue d'une variante de la figure 5, avec moufle.

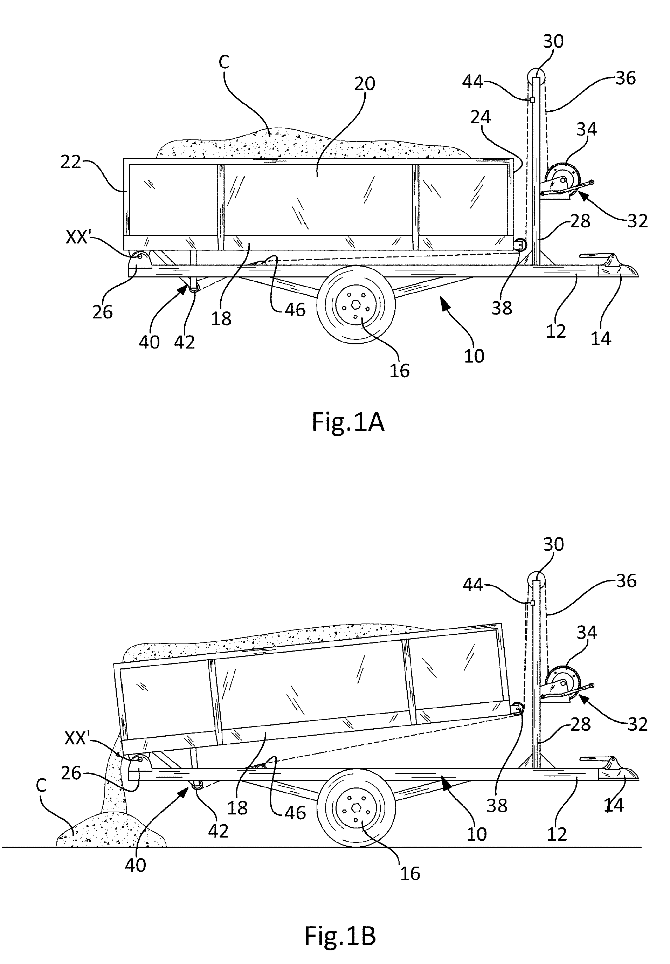

Sur la figure 1A, la remorque bagagère selon la présente invention comprend de façon connue un châssis 10, un timon 12 avec une tête 14 d'attelage.

Le châssis 10 est monté de façon connue sur un train 16 de roues.

Sur ce châssis, il est rapporté un plateau 18, muni de ridelles 20 latérales, d'une ridelle 22 arrière et d'une ridelle 24 avant.

Le plateau est articulé, en son extrémité arrière, dans ce mode de réalisation principal, autour d'un axe XX' de pivotement, orienté transversalement par rapport à la direction de déplacement. L'articulation peut consister en une double chape 26.

Le dispositif de manoeuvre en inclinaison selon la présente invention comporte un mât 28 rapporté de façon fixe sur le châssis 10 en avant du plateau et en position centrale. Ce mât 28 est perpendiculaire au plan du châssis 10 et se prolongeant vers le haut.

Ce mât 28 porte une poulie 30 de renvoi, placée en tête de mât.

En avant dudit mât 28, côté tête d'attelage, il est disposé un treuil 32 dont le tambour 34 enroule un câble 36 de traction.

Le dispositif de manoeuvre en inclinaison selon l'invention comporte également au moins un rouleau 38 d'appui du câble 36. Ce rouleau 38 est solidaire du plateau 18, sur l'avant, en position centrale et libre en rotation.

Le dispositif de manoeuvre en inclinaison selon l'invention comprend enfin un bras 40 de force solidaire du plateau, dans une position arrière, proche de l'axe XX' de pivotement. Ce bras 40 de force est agencé de façon sensiblement perpendiculaire au plan du plateau, vers le sol, dans ce mode de réalisation. Ce bras de force comporte un renfort 40-1, schématiquement représenté par une jambe de force.

L'extrémité du bras 40 de force porte une poulie 42 de renvoi.

Il est en outre prévu un point 44 de fixation de l'extrémité libre du câble, en l'occurrence, un point fixe sur le mât 28, de préférence au plus près du sommet du mât. Ceci permet de constituer un moufle, donc de générer une démultiplication.

De façon optionnelle, il peut être installé sur le châssis, un rouleau 46 de guidage à proximité du bras 40 de force, en amont, c'est-à-dire entre le train 16 de roues et ledit bras 40 de force.

Le chemin de câble 36 est le suivant : l'extrémité libre est solidarisée au point 44, fixe du mât, passe en appui sur le rouleau 38 puis dans la poulie 42 du bras 40 de force et éventuellement sur le rouleau 46 de guidage s'il est présent. Ensuite le câble 36 revient sur le rouleau de guidage 46 s'il est présent et passe en appui sur le rouleau 38 puis remonte sur la poulie 30 de renvoi en tête de mât 28 puis vient s'enrouler sur le tambour 34 du treuil 32.

Le dispositif de manoeuvre en inclinaison selon la présente invention fonctionne de la façon maintenant décrite.

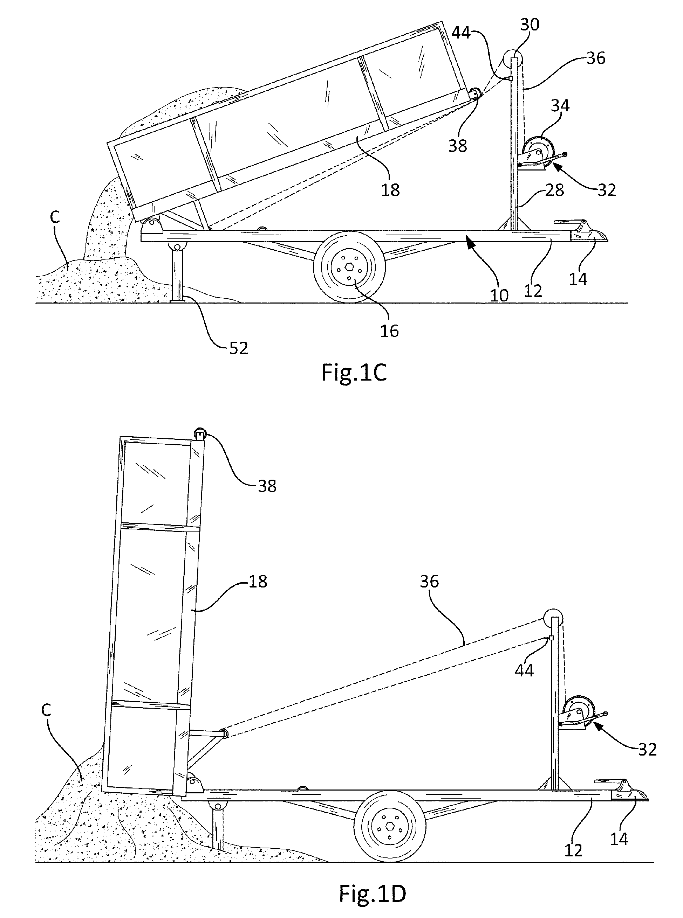

Sur la figure 1, on considère que le plateau 18 porte une charge *C* en vrac. Lorsque l'utilisateur souhaite décharger la charge C au sol, il positionne la remorque de la façon adaptée pour que la charge descende du plateau à l'endroit souhaité.

La ridelle 22 arrière est ouverte ou retirée.

L'utilisateur peut alors agir sur le treuil 32 et enroule le câble 36.

Le câble exerce alors une traction sur l'extrémité du bras 40 de force par l'intermédiaire de la poulie 42. Ceci a pour conséquence de faire pivoter le plateau autour de l'axe XX'.

Simultanément, le câble 36, par ses deux brins, passe sous le rouleau 38 et provoque un soulèvement du plateau en un point avant. Ce soulèvement est prépondérant sur l'effet de levier exercé par le bras 40 de force.

Sur la figure 1B, on constate bien la double action. Le chargement commence à descendre du fait du début d'inclinaison. Le centre de gravité du plateau et de sa charge se déplace vers l'axe XX' de rotation du plateau 18, ce qui diminue le couple nécessaire pour le basculement et l'effort sur le treuil diminue proportionnellement.

Par contre, le mât est fixe et limité en hauteur si bien que sur la figure 1C, le câble 36 agit plus sur le bras 40 de force que sur le rouleau 38 jusqu'à annuler l'effort sur ledit rouleau, par perte de contact avec ledit câble 36.

La charge C commence à quitter le plateau 18 et à descendre vers l'arrière soulageant d'autant le plateau et déplaçant la charge dans le sens d'un effort plus faible pour l'utilisateur. Le treuil comportant une démultiplication, la puissance générée reste très largement suffisante et sans nécessiter d'effort très important de la part de l'utilisateur. Dans cette variante, le moufle constitué assure aussi une démultiplication supplémentaire.

La traction sur le câble 36 et la géométrie du bras permettent de placer le plateau 18 comme sur la figure 1D, c'est-à-dire sensiblement vertical.

L'ensemble de la charge peut s'écouler. On note aussi qu'il est ainsi possible de générer un cône de déchargement plus haut que la hauteur de la remorque. Il n'y a pas besoin d'avancer la remorque avec une faible inclinaison pour la vider complètement, ce qui conduit inévitablement à l'étalement de la charge, comme dans l'art antérieur.

On note que l'inclinaison est volontairement limitée de façon à éviter tout blocage en position à 90° et pour ainsi faciliter le retour.

A cet effet, le retour est conduit simplement soit en débrayant le treuil et en déroulant le câble 36 avec un effort de retenue mais l'effort de retenue est très limité du fait que le plateau 18 est vide. Sur certains treuils, il est possible d'inverser la marche et de dérouler le câble en bénéficiant de crantage anti retour.

Si le moufle est supprimé par suppression de la poulie 42 au profit d'une liaison directe de l'extrémité du câble 26, alors le treuil devra être plus puissant ou l'effort fourni devra être plus important.

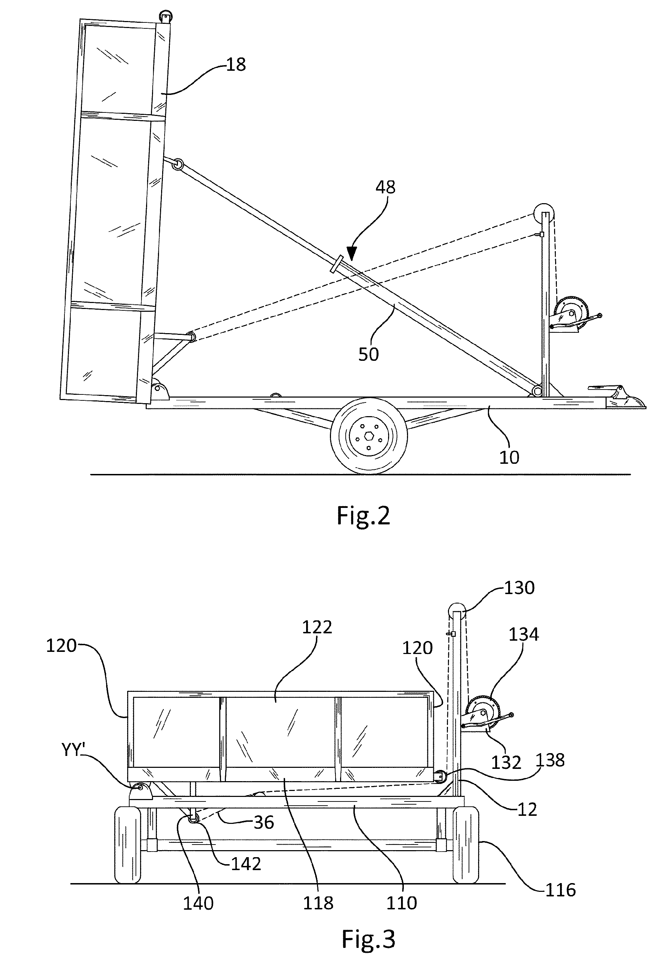

Néanmoins, il est possible de prévoir des moyens 48 de sécurité à la descente, comme un vérin 50 amortisseur comme montré sur la figure 2. Bien entendu, ce vérin est schématique et pourra être placé en tout lieu adapté pour freiner la course du plateau, un tel vérin étant du type à gaz ou à huile.

Une autre moyen consiste à prévoir une sangle de sécurité fonctionnant comme un enrouleur de ceinture de sécurité qui assure un blocage à la descente en cas de vitesse de descente trop rapide, par effet centrifuge.

De façon avantageuse, il est possible également de prévoir des béquilles 52 de stabilisation, escamotables, en plus de la liaison de la tête 14 d'attelage pour maintenir la remorque dans son ensemble.

Sur la figure 3, il est prévu une variante dans laquelle l'axe de pivotement YY' est orienté suivant un axe longitudinal, par rapport à la direction d'avancement. Les références identiques au mode de réalisation principal portent les mêmes chiffres augmentés de 100.

De ce fait, le mât 138 est disposé sur le côté opposé du châssis, en l'occurrence sur le côté droit, le plateau 118 basculant la charge sur le côté gauche.

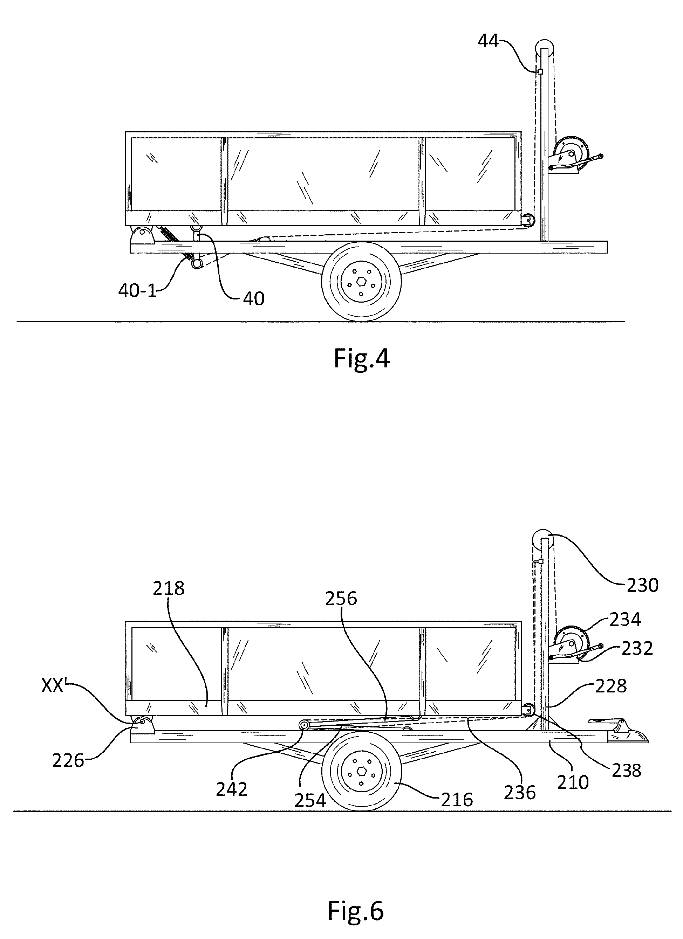

Sur la figure 4, on a prévu un bras 40 de force escamotable. Le bras 40 est alors articulé vers l'arrière et la jambe de force 40-1 est télescopique. Ceci augmente la garde au sol lors du roulage par exemple.

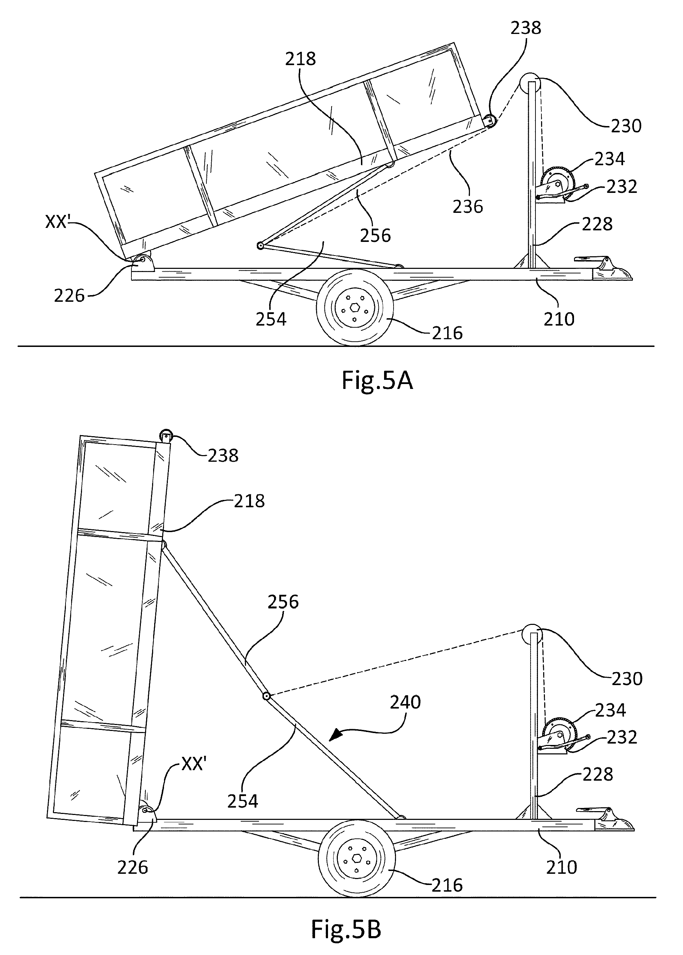

Sur les figures 5, on a représenté une variante dans laquelle le bras 40 de force a été remplacé par un compas 240. Les références des éléments identiques pour cette variante portent les mêmes numéros, augmentés de 200.

Le compas 240 comporte deux branches 254, 256.

On note que l'orientation du compas 240 est pointe vers l'arrière, tandis que les extrémités des branches sont fixées l'une sous le plateau 218 et l'autre sur le châssis 210, ceci de façon articulée.

Dans ce cas, l'extrémité libre du câble 246 vient se fixer sur l'articulation du compas, en son sommet, de façon avantageuse.

Ainsi sur la figure 5A, la traction du câble 236 assure l'ouverture du compas et le soulèvement du plateau 218, le plateau bascule alors autour de l'axe XX', grâce à la chape 226.

Sur la figure 5B, le compas qui prend le relais du rouleau d'appui 238, permet soit d'augmenter encore la garde au sol de la remorque, soit de diminuer la hauteur dudit plateau par rapport au sol.

Sur la figure 6, on peut également perfectionner cet agencement à compas des figures 5 et prévoir sur l'axe d'articulation du compas 240, en son sommet donc, une poulie 242 de renvoi, comme la poulie 42 sur le bras 40, ainsi qu'un point d'attache 244 du câble 246 sur le mât 228, ce qui constitue un moufle et assure une démultiplication supplémentaire.

L'agencement des moyens de sécurité au retour du type vérin à gaz ou à huile ou de blocage centrifuge par exemple, reste inchangé et ces moyens sont non représentés sur ces variantes.

L'agencement à basculement latéral de la figure 3 peut être équipé d'un compas en tant que bras 140 de force ou recevoir un bras de force 140 escamotable, avec les avantages déjà mentionnés, tout comme le montage d'un moufle.

Le câble 36, 136 mentionné peut aussi être remplacé par une sangle ou par tout autre cordage en matériau de résistance adaptée.

## Revendications

1. Dispositif de manoeuvre en inclinaison du plateau (18, 118, 218) d'une remorque bagagère comprenant un châssis (10, 110, 210), un axe XX' de pivotement dudit plateau (18, 118, 218), en son extrémité arrière par rapport à ce châssis (10, 110, 210), **caractérisé en ce qu'**il comprend un mât (28, 128, 228) fixe, perpendiculaire par rapport au châssis, se prolongeant vers le haut, muni d'un treuil (32, 132, 232), d'un câble (36, 136, 236) et d'une poulie (30, 130, 230) de renvoi dudit câble ainsi que d'un bras (40, 140, 240) de force, solidaire du plateau (18, 118, 218), de façon sensiblement perpendiculaire au plan du plateau, dans une position arrière proche de l'axe XX' de pivotement, ledit bras (40, 140, 240) de force recevant ledit câble (36, 136, 236).

2. Dispositif de manoeuvre en inclinaison du plateau (18, 118) d'une remorque bagagère selon la revendication 1, **caractérisé en ce que** le bras (40, 140) de force est orienté de façon sensiblement perpendiculaire au plan du plateau (18, 118), vers le sol, le câble (36, 136) étant solidaire de l'extrémité dudit bras de force.

3. Dispositif de manoeuvre en inclinaison du plateau (218) d'une remorque bagagère selon la revendication 1, **caractérisé en ce que** le bras de force est un compas (240) avec deux branches (254, 256), l'une fixée au châssis et l'autre fixée au plateau (218).

4. Dispositif de manoeuvre en inclinaison du plateau (18, 118, 218) d'une remorque bagagère selon l'une quelconque des revendications précédentes, **caractérisé en ce qu'**il comprend un rouleau (38, 138, 238) disposé à l'avant du plateau.

5. Dispositif de manoeuvre en inclinaison du plateau (18, 118, 218) d'une remorque bagagère selon l'une quelconque des revendications précédentes, **caractérisé en ce que** l'on ajoute un poulie (42, 142, 242) de renvoi disposée à l'extrémité du bras de force ou au sommet du compas, et un point fixe (44, 144, 244) de fixation sur le mât de l'extrémité du câble (36, 136, 236) de façon à constituer un moufle.

6. Dispositif de manoeuvre en inclinaison du plateau (18, 218) d'une remorque bagagère selon l'une quelconque des revendications précédentes, **caractérisé en ce que** l'axe XX' de pivotement du plateau (18, 218) est transversal par rapport à la direction de déplacement, à l'arrière de ladite remorque et le bras (40,240) de force est dans une position arrière, proche de l'axe XX' et le mât (28, 228) étant en avant du plateau et en position centrale.

7. Dispositif de manoeuvre en inclinaison du plateau (118) d'une remorque bagagère selon l'une quelconque des revendications 1 à 5, **caractérisé en ce que** l'axe YY' de pivotement du plateau (118) est orienté suivant un axe longitudinal, par rapport à la direction d'avancement, sur un côté, le mât (128) étant disposé sur le côté opposé.

8. Dispositif de manoeuvre en inclinaison du plateau (18, 118) d'une remorque bagagère, selon l'une quelconque des revendications 1, 2, 4, 5, 6 ou 7, **caractérisé en ce que** le bras (40,140) de force est escamotable sur l'arrière et comprend une jambe de force (40-1) télescopique.

9. Dispositif de manoeuvre en inclinaison du plateau (18, 118, 218) d'une remorque bagagère selon l'une quelconque des revendications précédentes, **caractérisé en ce qu'**il comprend une béquille (52).

10. Dispositif de manoeuvre en inclinaison du plateau (18, 118, 218) d'une remorque bagagère selon l'une quelconque des revendications précédentes, **caractérisé en ce qu'**il comprend des moyens (48) de sécurité à la descente.
